# EUROPÄISCHE PATENTSCHRIFT

(11) **EP 0 900 173 B1**
(45) Veröffentlichungstag und Bekanntmachung des Hinweises auf die Patenterteilung: **19.01.2000**
(21) Anmeldenummer: 97915400.2
(22) Anmeldetag: 20.03.1997
(51) Int. Cl.: B67D 5/16, G01F 15/00

(54) **VORRICHTUNG ZUM DOSIEREN UND MESSEN VON FLÜSSIGKEITSMENGEN**
DEVICE METERING AND MEASURING QUANTITIES OF LIQUID
DISPOSITIF POUR DOSER ET MESURER DES VOLUMES DE LIQUIDE

(30) Priorität: 29.04.1996 DE 29607736 U
(43) Veröffentlichungstag der Anmeldung: 10.03.1999
(73) Patentinhaber: TANKANLAGEN SALZKOTTEN GMBH, 33154 Salzkotten (DE)
(72) Erfinder: HENKSMEIER, Ralf, D-33129 Delbrück (DE); KÖPL, Manfred, D-44805 Bochum (DE)
(74) Vertreter: Fitchett, Stuart Paul
(86) Internationale Anmeldenummer: EP9701396
(87) Internationale Veröffentlichungsnummer: WO9741057

(56) Entgegenhaltungen:
- EP-A- 0 431 873
- EP-A- 0 440 845
- EP-A- 0 532 202
- WO-A-93/12405
- FR-A- 2 232 507

## Beschreibung

Die Erfindung betrifft eine Vorrichtung zum Dosieren und Messen von Flüssigkeitsmengen, insbesondere in einer Tanksäule für flüssige Kraftstoffe gemäß Gattungsbegriff des Anspruches 1.

Eine derartige Vorrichtung ist im Stand der Technik bekannt. Bei der bekannten Vorrichtung finden ein oder mehrere Volumenmeßwerke in Form von Kolbenverdrängungszählwerken Verwendung, wobei jedem Volumenmeßwerk ein Ventil zugeordnet ist. Ventil und Volumenmeßwerk sind ebenso wie Ventil und Flüssigkeitszuführung mittels Rohren verflanscht. Die Flüssigkeitszuführung kommt von einer Pumpe, welche den flüssigen Kraftstoff aus einem Vorratstank pumpt. Die bekannte Vorrichtung benötigt nicht nur einen großen Raum, die Vorrichtung ist darüber hinaus aufwendig herzustellen. Weiterhin ist die bekannte Vorrichtung hinsichtlich ihrer Betriebs zuverlässigkeit zu verbessern.

Der Erfindung liegt die Aufgabe zugrunde, eine gattungsgemäße Vorrichtung herstellungstechnisch, gebrauchstechnisch zu verbessern und gebrauchszuverlässig weiterzubilden.

Gelöst wird die Aufgabe durch die in den Ansprüchen angegebene Erfindung.

Die Erfindung zeichnet sich durch eine geringe Baugröße aus. Auch fertigungstechnisch ist die Vorrichtung durch die Blockbauweise vereinfacht. Die Gehäuseformgebung erfolgt durch spanende Bearbeitung, bspw. Bohren oder Fräsen, von den Stirnseiten bzw. Breitseiten her.

Dabei können die den Volumenmeßwerken zugeordneten Gehäuse ausschließlich stirnseitig bearbeitet sein. Auch vereinfacht sich die Dichtungsanordnung durch die unmittelbare Aneinanderfügung der einzelnen Blöcke, so daß die Stirnseite des die Schraubenspindelanordnung tragenden Blocks von der Breitseite des Ventilblocks abgedeckt werden kann. Die Lagerkammern für die Axiallager der Spindeln werden somit optimal dichtend überfangen. Insbesondere beim Einsatz der erfindungsgemäßen Vorrichtung oberhalb einer Förderpumpe, wobei die Vorrichtung von der Förderpumpe selbst getragen ist, hat sich unter anderem auch ein günstiges Vibrationsverhalten gezeigt. Es hat sich darüber hinaus gezeigt, daß die erfindungsgemäße Vorrichtung kaum nachzukalibrieren ist und im hohen Grade maßhaltig dosierte Flüssigkeitsmengen abgibt bzw. mit hoher Maßhaltigkeit mißt. Auf Rohrverbindungsleitungen zwischen den einzelnen Gehäuseblöcken kann völlig verzichtet werden, da sich wegen der unmittelbaren Aufeinanderlage von Gehäuseflächen die Gehäuseöffnungen in einfacher Weise abdichten. Ebenso hat es sich als vorteilhaft herausgestellt, daß die Ventile sowohl vom Gehäuse, als auch von auf Ventilanschlußöffnungen aufgesetzten Ventilköpfen ausgebildet werden, wobei den Ventilköpfen die Steuerorgane für die Ventile zugeordnet sind. In vorteilhafter Weise sitzen die zweiten Gehäuseblöcke, in welchen die Spindeln angeordnet sind, mit ihren Stirnseiten auf einer Breitseite des ersten Gehäuseblokkes. Hierdurch kann sich die bevorzugte U-Form des Gesamtgehäuses ausbilden. Die Ventilanschlußöffnungen können den Stirnseiten des ersten Gehäuseblocks zugeordnet sein, so daß sich die beiden Ventile gegenüberliegen. Die Gehäuseblöcke weisen bevorzugt eine Quadergestalt auf. Die Stirnseiten haben eine quadratische Grundfläche. Der Ventilkolben kann als freibeweglicher Kolben, als Membran oder dergleichen ausgebildet sein und verlagert sich bevorzugt innerhalb der Trennebene zwischen Gehäuseblock und Ventilkopf, also durch die Ventilanschlußöffnung hindurch. In die Ventilanschlußöffnung mündet ein Zuführkanal, welcher von der bevorzugt rückschlagventilverschlossenen Eintrittsöffnung ausgeht. Dieser Zuführungskanal mündet vorzugsweise in einen unter dem Randbereich des Kolbens bzw. der Membran liegenden Ringraum. Der Ringraum umschließt den Verbindungskanal, welcher das Ventil mit dem Volumenmeßwerk verbindet. Das Volumenmeßwerk besteht vorzugsweise aus zwei ineinandergreifenden, axial durchströmten Schraubenspindeln, die nach dem Verdrängerprinzip von der durchströmenden Flüssigkeitsmenge drehangetrieben werden. Eine derartige Flüssigkeitsmengen-Meßeinrichtung ist aus der DE 41 42 062 her bekannt. Eine der beiden Spindeln kann ein Impulsgeberrad tragen, welches mit Magneten versehen ist, welche sich unter einem Magnetsensor hinwegbewegen. Die dabei erzeugten Impulse werden einer Impulsumform- und Meßeinrichtung zugeführt, in welcher aus den elektronischen Impulsen Mengenwerte abgeleitet werden, welche auf einer Anzeige dargestellt werden. Die Ventilköpfe, welche auf die Ventilanschlußöffnungen unter Zwischenlage einer Dichtung aufgesetzt werden, können als Betätigungsorgane Magnetventile aufweisen. Diese Magnetventile können jeweils ein Vorsteuerventil und ein Bypass-Ventil ausbilden. Mit dem Vorsteuerventil werden im Ventil vorgesehene Überströmkanäle geöffnet, so daß der Ventilkolben in eine Öffnungsstellung verlagert werden kann. Beim Schließen des Vorsteuerventils sorgt eine Rückdrückfeder dafür, daß sich der Ventilkolben oder dergleichen in eine Verschlußstellung zurückverlagert. Neben dem Vorsteuerventil kann ein Bypass-Ventil vorgesehen sein, welches eine Bypass-Öffnung zwischen dem Zuführkanal und dem Verbindungskanal öffnet, so daß ein feinfühliges Dosieren von Kraftstoffen möglich ist. Dies ist insbesondere dann nötig, wenn die Vorrichtung innerhalb einer Tanksäule Verwendung finden soll, an welcher vorbestimmte Mengen getankt werden kann. Der die Schraubenspindel aufweisende Gehäuseblock besitzt zwei sich überschneidende Bohrungen, deren Innendurchmesser dem Außendurchmesser der Spindeln entspricht, so daß sich die Spindeln darin frei drehen können. Stirnendseitig der sich überschneidenden Bohrungen weitet sich die Höhlung des Gehäuseblockes in querschnittsgrößere Kammern auf. Diese querschnittsgrößeren Kammern bilden Lageraufnahmen für die Axiallager der Spindeln aus. Die Axiallager der Spindeln sind bevorzugt Kugellager und von der Stirnseite des Gehäuseblocks her frei zugänglich und im zusammengebauten Zustand von der Blockwand des angrenzenden Gehäuses überdeckt. Während die eine Stirnseite des zweiten Gehäuseblockes vom ersten Gehäuseblock abgedeckt wird, kann die andere, gegenüberliegende Stirnseite von einem fluchtend zum zweiten Gehäuseblock angeordneten Sensorblock überfangen sein. Dieser Sensorblock überdeckt dann die Kammer und trägt den besagten Magnetsensor, welcher mit dem axial überstehenden Polrad zusammenwirkt. Einen stirnseitigen Abschluß kann der zweite Gehäuseblock durch eine axiale Ableitung für die dosierte Flüssigkeit ausbilden. In einer bevorzugten Weiterbildung der Erfindung, die eigenständigen Charakter hat, ist die Meßblockanordnung oberhalb einer Förderpumpe montiert. Dabei liegen die Spindeln in Horizontalrichtung. Auch die Ausbildung der Förderpumpe ist für sich erfinderisch und besitzt eigenständige Bedeutung. Von Bedeutung ist insbesondere, daß die Förderpumpe einen Einsatz ausbildet, welcher als Innenzahnradpumpe ausgebildet ist. Dieser Einsatz ermöglicht es, die wesentlichen, verschleißanfälligen Teile der Pumpe in einfacher Weise auszutauschen, ohne daß das gesamte Gehäuse aus der Tanksäule entfernt werden muß. Der Einsatz besitzt eine Flanschkappe, die eine Aufnahmeöffnung für die Innenzahnradpumpe überdeckt und welche mit dem Pumpengehäuse verschraubt werden kann. Die Förderpumpe besitzt in vorteilhafter Weise einen doppelten Gasabscheider mit schwimmergesteuerter Flüssigkeitsrückführung. Der Gasabscheider ist innerhalb des Pumpenkörpers angebracht und besitzt ein relativ kleines Volumen und ermöglicht es trotzdem, auch Dieselkraftstoff blasenfrei zu zapfen. Es wird dabei als vorteilhaft angesehen, daß der Gasabscheider insgesamt zwei, spiegelbildlich angeordnete Zyklone aufweist, in welche der gepumpte Kraftstoff eingebracht wird und in welchem zufolge der Fliehkraftsbeschleunigung die Gasanteile radial einwärts ausweichen und nach oben entweichen können. Oberhalb des Zyklons ist eine Verdrängerkammer in Form einer Glocke angeordnet, welche bei einer erhöhten Gaskonzentration ein Magnetventil schaltet, welches die Ventile im Meßblock abschaltet, so daß die Pumpe zunächst nur entgasend wirkt. Der Gasabscheider weist bevorzugt zwei durch eine Überlaufkante getrennte Kammern auf. In der zweiten Kammer kann ein Schwimmer angeordnet sein, welcher eine Rückführöffnung verschließt, durch welche die aus dem kondensierten Gas sich bildende Flüssigkeit zur Saugseite der Pumpe zurückgeführt werden kann. Die Vorrichtung kann auch im Tauchpumpenbetrieb eingesetzt werden.

Ausführungsbeispiele der Erfindung werden nachfolgend anhand beigefügter Zeichnungen im Detail erläutert. Es zeigen:
- Fig. 1: eine Meßblockanordnung im Querschnitt,
- Fig. 2: eine Ansicht in Richtung der Eintrittsöffnung des ersten Ausführungsbeispiels,
- Fig. 3: eine Detaildarstellung des Polrades,
- Fig. 4: eine Alternativversion eines Ventils,
- Fig. 5: die Breitseitenansicht auf den Auslaß des Verbindungskanales,
- Fig. 6: die Stirnseitenansicht eines Spindelgehäuses gegenüberliegend zur Darstellung gemäß Fig. 5,
- Fig. 7: eine erste Funktionsdarstellung eines Doppelventiles im geschlossenen Zustand,
- Fig. 8: eine Darstellung gemäß Fig. 7 in geöffnetem Zustand,
- Fig. 9: eine Darstellung gemäß Fig. 7 in der Bypass-Stellung,
- Fig. 10: ein Anordnungsbeispiel der Erfindung auf einer Förderpumpe,
- Fig. 11: eine um 90° versetzte Darstellung gemäß Fig. 11,
- Fig. 12: die Draufsicht auf eine erfindungsgemäße Förderpumpe bei abgenommenem Deckel,
- Fig. 13: einen Schnitt gemäß der Linie XIII-XIII in Fig. 12,
- Fig. 14: einen Schnitt gemäß der Linie XIV-XIV in Fig. 13,
- Fig. 15: einen Schnitt gemäß der Linie XV-XV in Fig. 13 und
- Fig. 16: einen Schnitt gemäß der Linie XVI-XVI in Fig. 13.

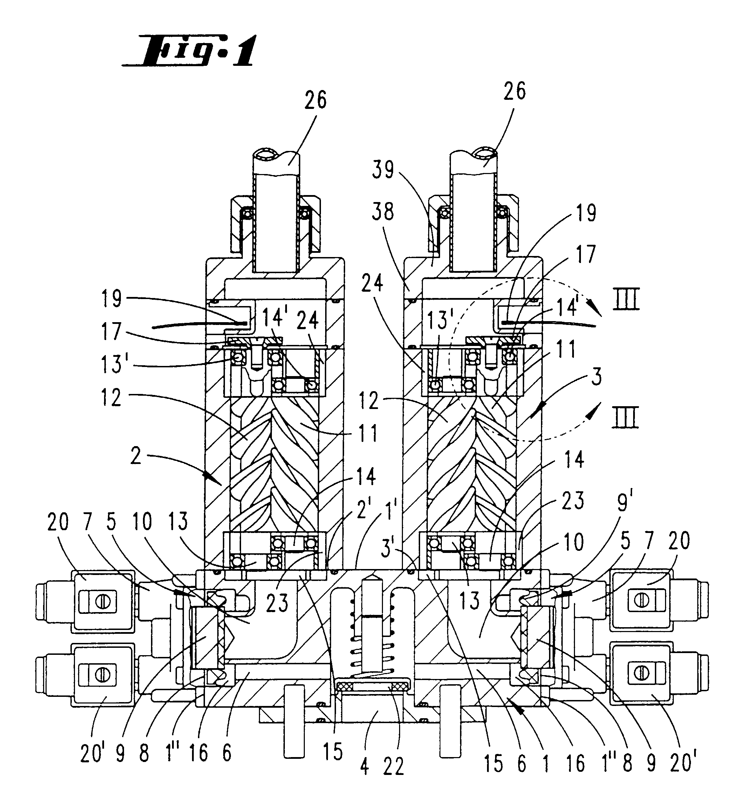

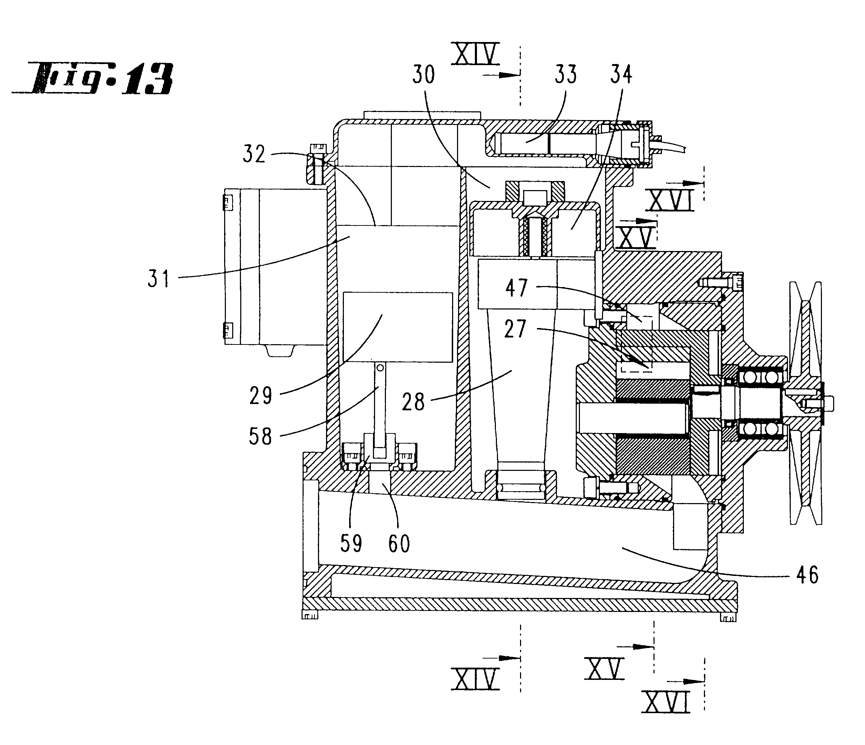

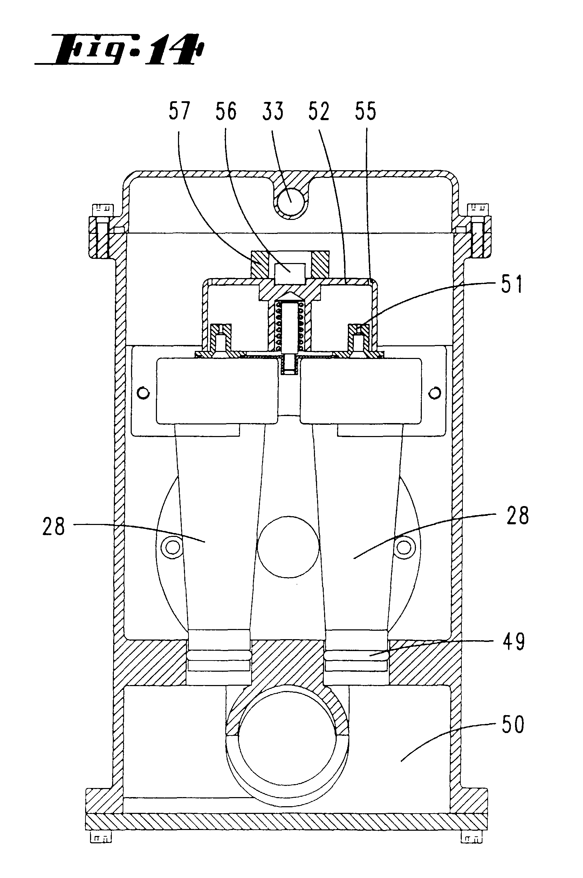

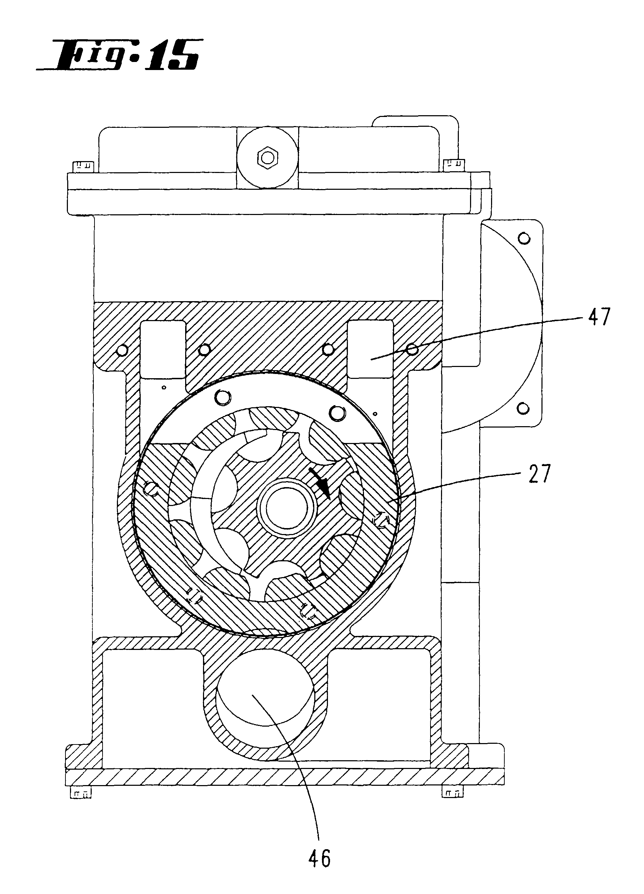

Die erfindungsgemäße Meßblockanordnung dient zum Dosieren und zum Messen von jeglicher Art von Treibstoff, insbesondere Benzin, aber auch Dieselkraftstoff in einer Tanksäule, bspw. einer Tanksäule für Kraftfahrzeuge. Die in Fig. 1 dargestellte Vorrichtung kann bspw. in der in Fig. 10 dargestellten Weise oberhalb einer Förderpumpe 25 angeordnet sein.

Die in der Fig. 1 dargestellte Vorrichtung besitzt ein quaderförmiges Ventilgehäuse 1, an dessen Stirnseiten 1'' jeweils eine Ventilanschlußöffnung 8 vorgesehen ist. Auf der Breitseite 1' des Ventilgehäuses 1 sind in paralleler Lage und beabstandet zueinander zwei Spindelgehäuse 2, 3 aufgeschraubt. Dabei liegen die quadratischen Stirnflächen 2', 3' plan auf der rechtekkigen Breitseitenfläche 1' des Ventilgehäuseblocks 1 auf. Das Ventilgehäuse besitzt in Gegenüberlage zur Breitseite 1' eine Eintrittsöffnung 4, welche von einem Rückschlagventil 22 gegen Feder verschließbar ist, so daß nur Flüssigkeit von einer Pumpe durch die Eintrittsöffnung 4 in das Ventilgehäuse 1 gelangen kann.

Die Eintrittsöffnung 4 hat einen kreisrunden Querschnitt und besitzt einen Anschraubflansch für eine Durchströmverbindung zur Pumpe 25. Die von der Eintrittsöffnung 4 ausgehende Flüssigkeitszuleitung verzweigt sich unmittelbar nach dem Rückschlagventil in gegenüberliegende Zuführkanäle 6, welche in den Ventilanschlußöffnungen 8 münden. Die Ventilanschlußöffnungen 8 werden jeweils von einem Ventilkopf 7 überfangen. Der sich quer zur Trennebene zwischen Ventilkopf 7 und Stirnfläche 1'' bewegende Kolben 9 wird durch den Ventilkopf 7 gekapselt. Der Kolben 9 bzw. eine den kreisrunden Kolben ringsherum umragende Membran 9' überdecken einen Ringraum 16, in welchen der Zuführkanal 6 mündet. Innerhalb des Ringraumes 16 befindet sich der vom Kolben 9 in der Geschlossenstellung überdeckte Verbindungskanal 10, welcher einen rechtwinkligen Knick aufweist und zur Breitseite hin in eine Austrittsöffnung 15 mündet. Die Austrittsöffnung 15 wird von dem Spindelgehäuse 2, 3 überfangen und abgedichtet. Die Austrittsöffnung 15 kann Rippen 35 ausbilden, auf welchen sich die Axiallager 13, 14, welche als Kugellager ausgebildet sind, in Achsrichtung abstützen können.

Die Axiallager 13, 14 liegen in einer Kammer 23, welche dem Spindelgehäuse 2, 3 zugeordnet ist und welche stirnseitig offen ist. Die beiden ineinandergreifenden Schraubenspindeln 11, 12 werden anderendseitig ebenfalls von Kugellagern 13', 14' gelagert.

Die Austrittsöffnung 15 wird von einem O-förmigen Dichtungsring 36 umfangen, welcher in einer Nut der Breitseite 1' einliegt und in dichtender Anlage zur Stirnseite 2', 3' des Spindelgehäuses 2, 3 tritt. In der Kammer 23 ragen ebenfalls Rippen 37 einwärts, welche zur radialen Fixierung der Kugellager dienen. Die Kugellager sind axial versetzt zueinander angeordnet.

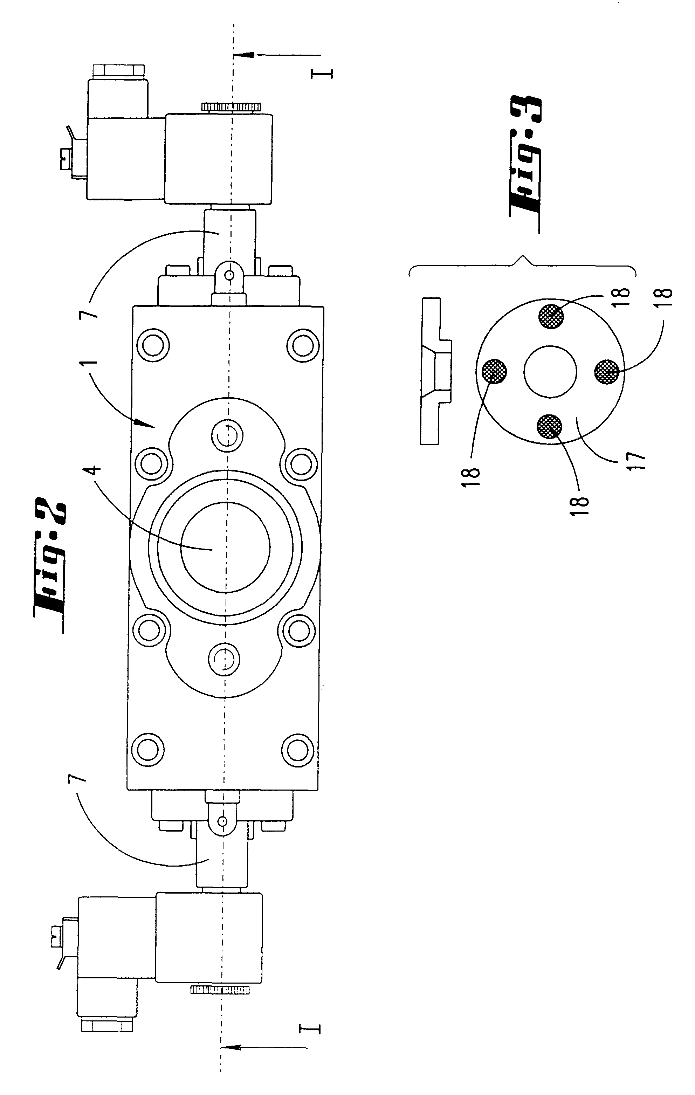

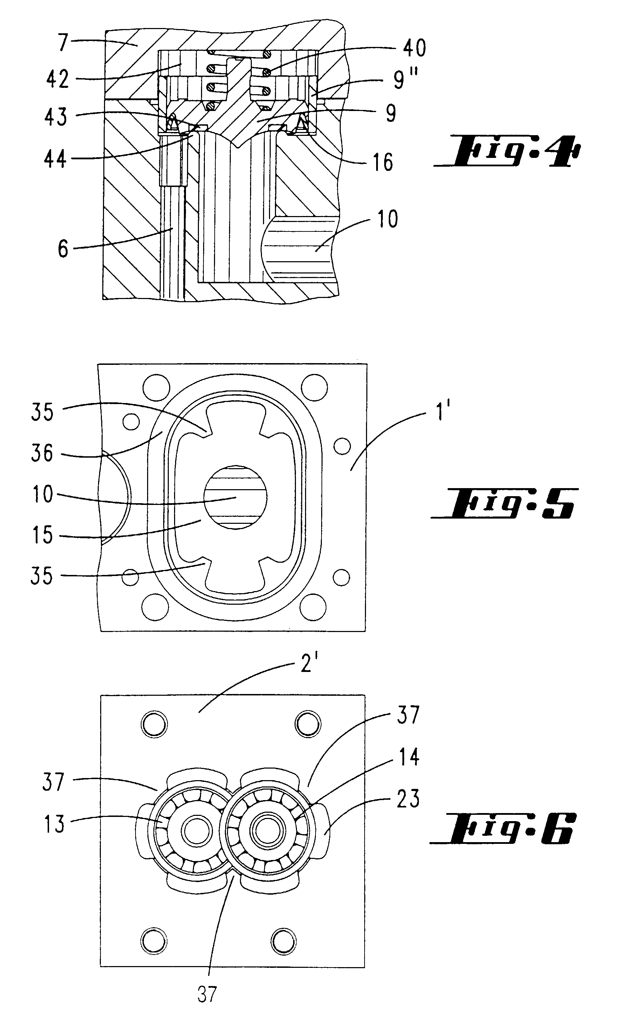

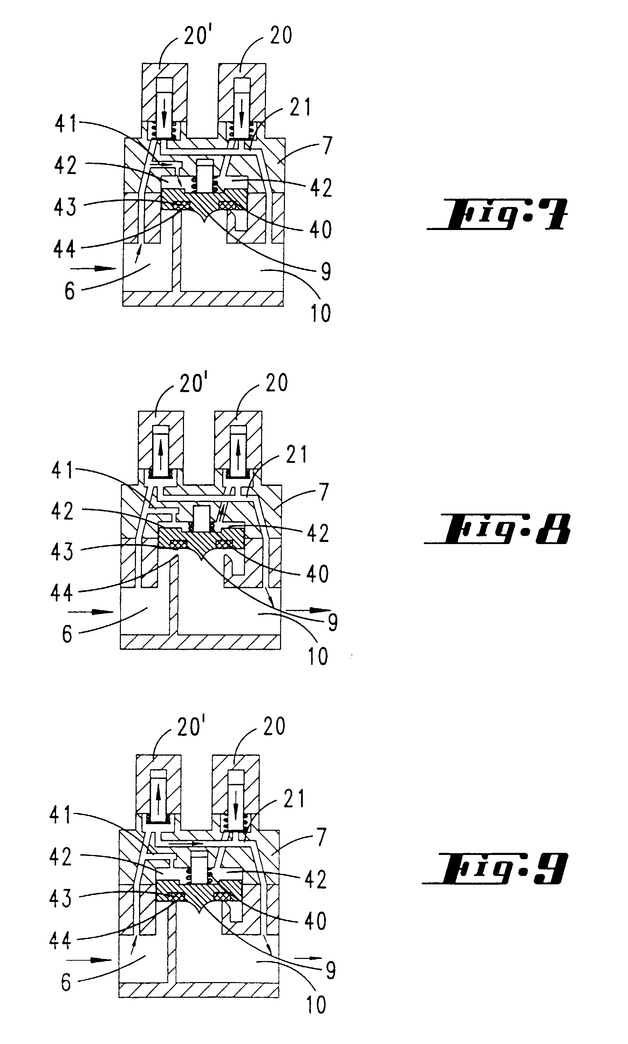

An der der Stirnseite 2', 3' gegenüberliegenden Seite ist ein Sensorgehäuse 38 vorgesehen. Im Sensorgehäuse 38 ist ein magnetischer Sensor 19, bspw. ein Hall-Element, vorgesehen. Das Hall-Element 19 wirkt zusammen mit dem in Fig. 4 dargestellten Polrad 17, welches auf der Achse der Spindel 11 sitzt. Das Polrad weist insgesamt vier jeweils im 90°-Winkel zueinander stehende Magnete 18 auf. Das Polrad liegt im Sensorgehäuse 38.

Das Sensorgehäuse 38 wird überfangen von einem Ableitungsflansch 39, an welchem die Ableitung 26 zur Zapfpistole oder dergleichen angeschlossen ist.

Der Ventilkopf kann zwei Magnetventile 20, 21 ausbilden. Vom Magnetventil 20 kann über eine Vorsteueranordnung der Kolben 9 verlagert werden. Das Ventil 20' kann einen Bypass 21 öffnen, welcher den Zuführkanal 6 mit dem Verbindungskanal 10 verbindet.

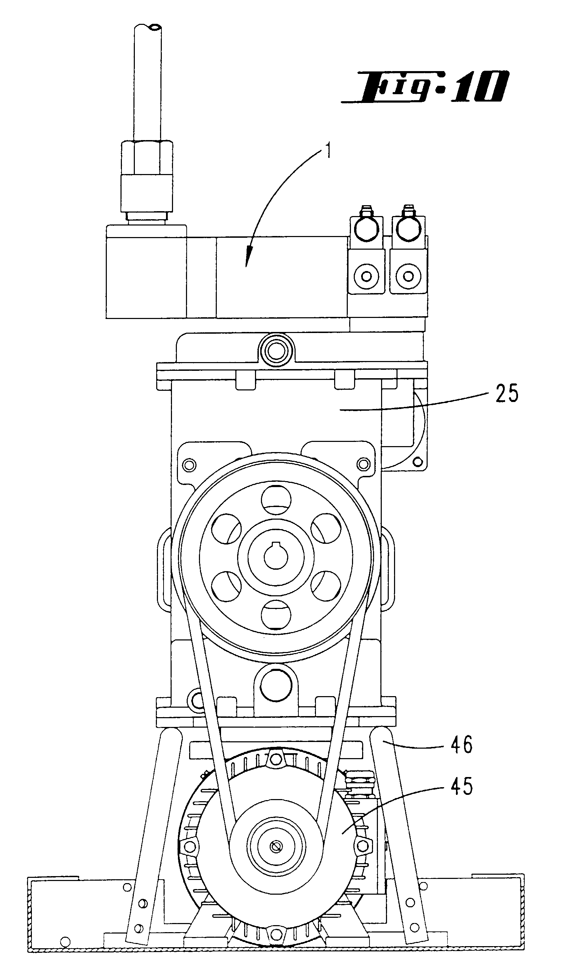

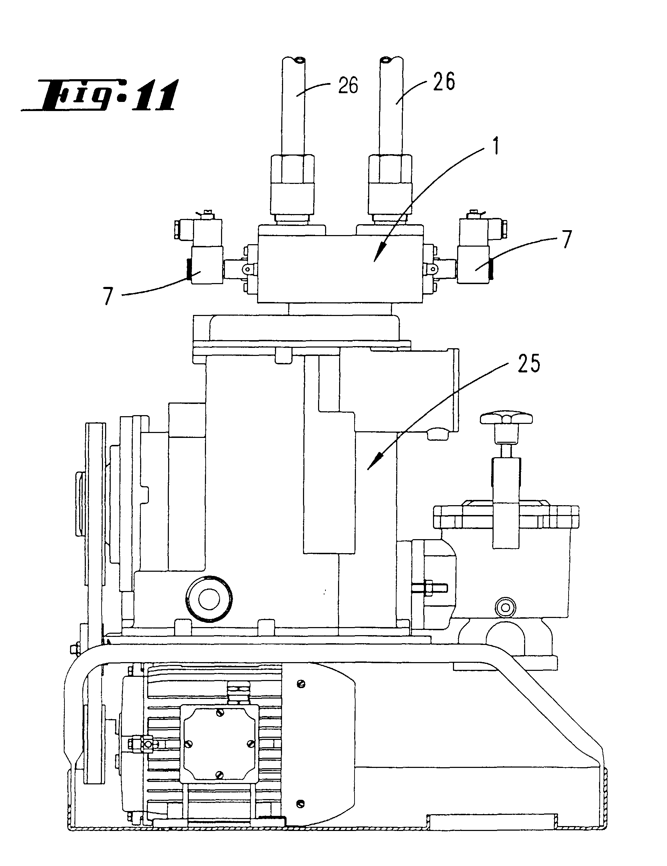

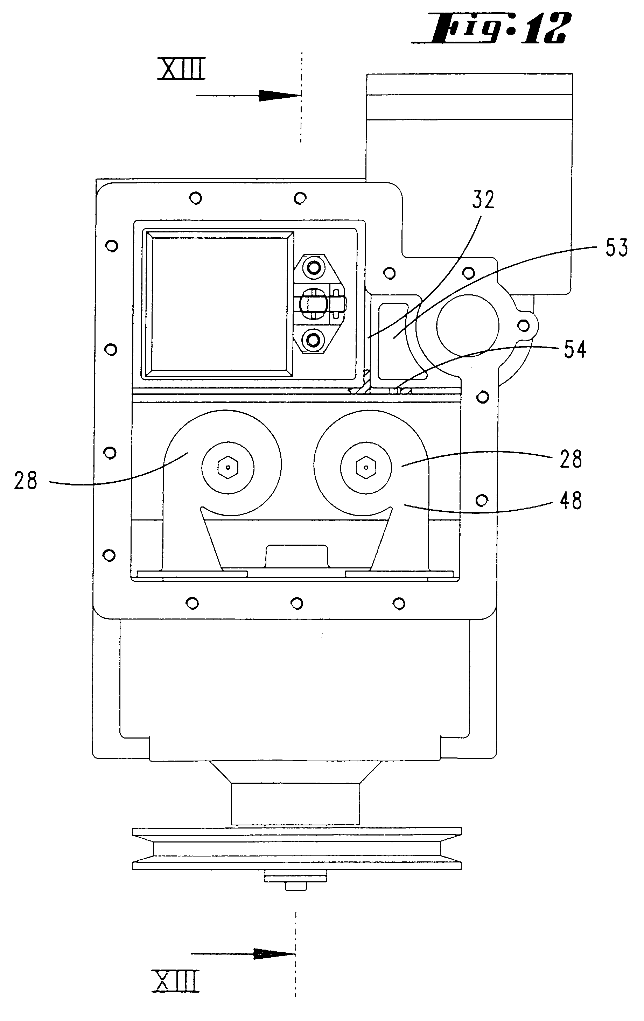

In den Fig. 7 bis 9 ist eine alternative Ventilanordnung schematisch dargestellt. Der Ventilkolben ist mittig zugespitzt und stützt sich mittels einer Feder 40 am Ventilkopf 7 ab. Im stromlosen Zustand der Magnete der Ventile 20, 20' sind das Vorsteuerventil 20 und das Bypass-Ventil 20' geschlossen. Wegen des Kanals 41 zwischen dem Zuführkanal 6 und dem Ventilraum 42 oberhalb des Kolbens herrscht beidseitig des Kolbens der gleiche Druck. Aufgrund der größeren Wirkfläche über dem Kolben bleibt das Ventil geschlossen (Fig. 7). Der Kolben 9 sitzt mit seinem Dichtungsring 43 auf der ringförmigen Ventilsitzöffnung 44 des Verbindungskanales 10.

Durch Einschalten des elektrischen Stromes werden das Vorsteuerventil 20 und das Bypass-Ventil 20' geöffnet, so daß der Druck im Ventilraum 42 über dem Kolben zur Austrittsseite ds Ventilblockes 10 abgebaut wird. Durch den höheren Kraftstoffdruck auf der Unterseite wird der Kolben angehoben und das Ventil ist geöffnet (Fig. 8).

Der Betankungsvorgang erfolgt zunächst in der in Fig. 8 dargestellten Offenstellung. Zur Beendigung des Tankvorganges werden die Ventile 20, 20' stromlos geschaltet. Der Bypass 21 ist dann verschlossen, ebenso wie die Verbindung zwischen Ventilraum 42 und dem Kanal 10. Durch die Verbindung zwischen dem Zuführkanal 6 zum Ventil 42 kann Flüssigkeit nachströmen. Wegen der höheren Wirkfläche auf der Kolbenrückseite gegenüber dem Ringraum schließt der Kolben.

Soll eine definierte Menge gezapft werden, so schließt ausgehend von der in Fig. 8 dargestellten Offenstellung zunächst nur das Vorsteuerventil 20. Der dann gedrosselte Kraftstofffluß, der ca. 2 1 pro Minute beträgt, ermöglicht ein exaktes Schließen des Bypass-Ventils 20' und damit die Beendigung des Tankvorganges genau bei Erreichen der vorgewählten Kraftstoffabgabemenge. Hierzu wird zunächst das Vorsteuerventil 20 geschlossen (vergl. Fig. 9). Über den Bypass 21 kann dann ein gedrosselter Kraftstofffluß fließen. Die Drosselung des Ventils wird durch einen nicht dargestellten Rechner gesteuert: Etwa 0,5 1 vor Erreichen der gewählten Abgabemenge schließt das Vorsteuerventil auf ein Signal des Rechners hin. Beiderseits des Kolbens 9 baut sich nun der gleiche Kraftstoffdruck auf. Zufolge der Feder 40 und der größeren Wirkfläche über dem Kolben schließt das Ventil. Der Kraftstoff fließt nun nur noch durch das Bypass-Ventil. Ist die vorgegebene Menge abgegeben, schaltet der Rechner das Bypass-Ventil ab.

Eine Variante eines Ventiles zeigt die Fig. 4. Dort ist der Ventilkolben 9 nicht wie in Fig. 1 von einer Membran 9' umgeben, sondern läuft in einer Büchse 9''. Bei dieser Ausgestaltung wird der Ringraum 16, in welchen der Zuführkanal 6 mündet, von einer kreisförmigen Nut im Kolben 9 ausgebildet. Die kreisförmige Nut umgibt einen Dichtungsring 43, der sich auf den stirnseitigen Kreiswulst auflegt, welcher das stirnseitige Mündungsende des Kanals 10 ausbildet.

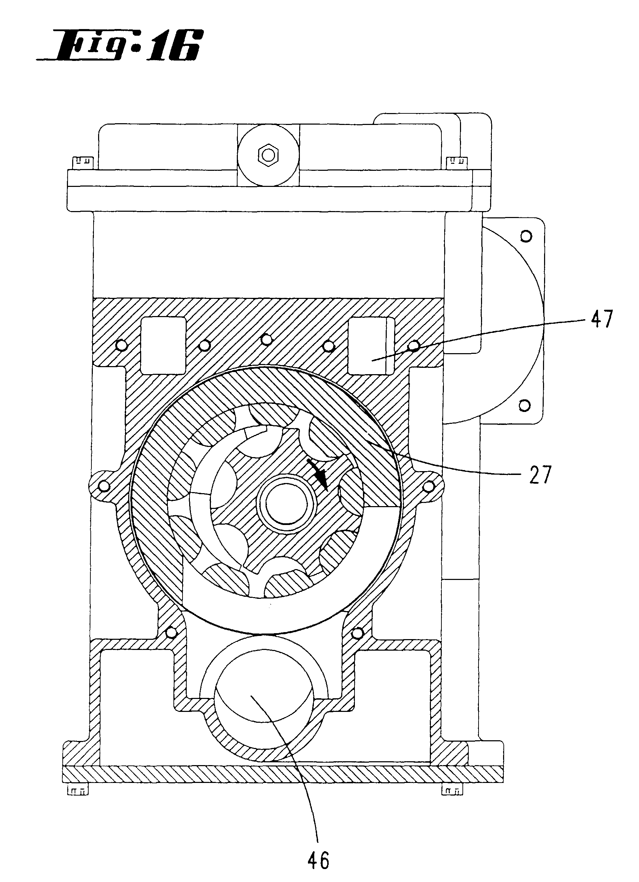

In den Fig. 10 und 11 ist eine Gesamtanordnung eines aus Meßblock und Pumpe bestehenden Förder-/Meßsystems dargestellt. Unterhalb der Pumpe 25 befindet sich ein Antriebsmotor 45. Oberhalb der Pumpe befindet sich der zuvor beschriebene Meßblock 1 mit seinen Ventilen 7 und Ableitungen 26.

Die Übereinanderanordnung von Meßblock, Pumpe und Elektromotor wird als vorteilhaft angesehen, da hierdurch die durchgängig raumgünstige Anordnung des Gesamtsystems vervollständigt wird. Auch ermöglicht diese Anordnung ein einfaches Austauschen der in Modulbauweise zusammengesetzten Teilkomponenten. Der Elektromotor 45 kann unter der Pumpe, welche auf Ständern 46 ruht, weggenommen werden, ohne daß die Pumpe oder der Meßblock entfernt werden muß. In gleicher Weise kann der in der Pumpe vorgesehene Pumpeneinsatz 27 aus dem Pumpengehäuse 25 herausgenommen werden, wenn dieser defekt ist.

Bei dem Pumpeneinsatz handelt es sich bevorzugt um eine Innenzahnradpumpe 27. Die von der Innenzahnradpumpe 27 über den Saugkanal 46 angesaugte Flüssigkeit wird durch die Druckkanäle 47 und dem tangentialen Eintrittsstutzen 48 den Zyklonen 28 zugeführt und gelangt über deren Austritte 49 in die Druckkammer 50. Aus der Druckkammer 50 wird die Flüssigkeit über einen Druckkanal und dem Druckfilter den Ventilen 5 zugeleitet und weiter zu den Meßeinrichtungen geleitet.

Beim Eintreten von Luft- oder Gasmengen in die Saugleitung 46 werden diese mit der Flüssigkeit gemischt von der Pumpe 27 über die Druckkanäle 47 und den tangentialen Eintrittsstutzen 48 den Zyklonen 28 zugeführt. Durch die tangentiale Einführung in die Zyklone 28 wird das Flüssigkeits-Gas-Luftgemisch in Drehbewegung versetzt, die in ihrer Umfangsgeschwindigkeit der Strömungsgeschwindigkeit innerhalb des gesamten Fördersystems entspricht. Hierbei werden durch die innerhalb des Zyklons entstehende Fliehkraft die klare Flüssigkeit nach außen und die vorhandenen Gas- und Luftmengen konzentrisch zur Zyklonmitte nach oben gefördert. Die durch die Zyklone 28 ausgetriebenen Gas- oder Luftmengen entweichen über Düsen 51. Es sind insgesamt zwei Zyklone 28 vorgesehen, welche parallelliegend zueinander in vertikaler Erstreckung angeordnet sind. Die Zyklone verlaufen nach unten gehend trichterförmig zu und münden in die Druckkammer 50.

Bei normalem Förderbetrieb strömt durch die Düsen 51 klare Flüssigkeit unter den glockenförmigen Verdrängerkörper 52. Der Flüssigkeitsspiegel unter dem Verdrängerkörper 52 und im Zwischenraum 53 stellen sich auf gleiche Höhe ein, da über die Bohrung 54 ein Druckausgleich erfolgt. Die Flüssigkeitshöhe wird über die Überlaufkante 32 festgelegt. Der Flüssigkeitsspiegel im Schwimmerraum 31 wird mit Hilfe einer Schwimmereinrichtung 29, die den Kraftstoff zurück zur Saugseite 46 der Pumpe fördert, konstant gehalten. Benachbart zum Schwimmerraum 31 liegt der erste Gasabscheideraum 30, welchem die Zyklone zugeordnet sind, und welcher über eine Druckausgleichbohrung 54 mit einem Zwischenraum 53 verbunden ist, welcher Teil des Schwimmerraumes 31 ist.

Geringe Gasmengen, die beim Normalbetrieb anfallen, werden von den Zyklonen 28 abgeschieden und über eine Ausgleichsbohrung 55 abgeleitet, ohne den Verdrängerkörper 52 zu aktivieren. Der Verdrängerkörper 52 kann sich in Achsrichtung nach oben bewegen, wenn sich unterhalb seiner Glocke eine bestimmte Gasansammlung gebildet hat. Dies kann z. B. bei der Inbetriebnahme oder im Störfall erfolgen. Wenn die Pumpe Gase fördert, sammeln sich diese unterhalb des Verdrängerkörpers 52. Da sie über die Ausgleichsbohrung 55 nur langsam entweichen können, entsteht oberhalb des Flüssigkeitsspiegels ein Überdruck, durch den der Verdrängerkörper 52 mit seiner Magnetscheibe 56 angehoben wird. Durch das Annähern der Magnetscheibe 56 öffnet der Magnetschalter 33 den Stromkreis der Magnetventile 20', 20 der Ventile 5, so daß diese geschlossen sind. Der Kraftstofffluß zur Meßeinrichtung wird unterbrochen. Es ist ein Distanzring 57 vorgesehen, welcher als Anschlagsbegrenzung dient.

Durch den Schwimmer 29 wird über eine Gelenkverbindung 58 und ein Ventil 59 eine Öffnung 60 geschlossen bzw. geöffnet, welche die Kammer 31 mit der Saugseite 46 verbindet.

Die aus der geförderten Flüssigkeit entweichenden Gase, welche nicht kondensieren, werden durch geeignete Ventilöffnungen im Pumpendeckel abgeführt, so daß die beiden Kammern des Gasabscheiders entlüftet werden können.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Vorrichtung zum Dosieren und Messen von Flüssigkeitsmengen, insbesondere in einer Tanksäule für flüssige Kraftstoffe, mit mehreren Volumenmeßwerken, wobei jedem Volumenmeßwerk ein zugeordnetes Ventil vorgeordnet ist, und mit einer Flüssigkeitszuführung, welche sich in zu den Ventilen mündende Einzelzuleitungen verzweigt, dadurch gekennzeichnet, daß die Ventile (5) und die Volumenmeßgeräte einem in Blockform gestalteten Gehäuse (1, 2, 3) zugeordnet sind, welches Gehäuse eine Eintrittsöffnung (4) und von der Eintrittsöffnung (4) zu den Ventilen (5) abzweigende, die Einzelzuleitungen ausbildende Zuführkanäle (6) aufweist, wobei ein erster Gehäuseblock (1) die Eintrittsöffnung (4) und von jeweils einem Ventilkopf (7) überdeckte Ventilanschlußöffnungen (8) ausbildet, in welchen Ventilanschlußöffnungen (8) jeweils ein Zuführkanal (6) mündet und von welchem jeweils ein von einem Kolben (9), Teller, Membran oder dergleichen eines Ventils (5) verschließbarer Verbindungskanal (10) zum zugeordneten Volumenmeßwerk abgeht, wobei die Volumenmeßwerke jeweils gesondert einem zweiten Gehäuseblock (2, 3) zugeordnet sind und jeder zweite Gehäuseblock (2, 3) das Rotorgehäuse für zwei ineinandergreifende, axial durchströmbare Schraubspindeln (11, 12) eines Schraubspindelzählers ausbildet, und wobei die den Axiallagern (13, 14) der Schraubspindeln zugeordnete Stirnende (2', 3') der zweiten Gehäuseblöcke Austrittsöffnungen (15) der Verbindungskanäle abdecken.

2. Vorrichtung nach Anspruch 1, dadurch gekennzeichnet, daß die zweiten Gehäuseblöcke (2, 3) mit ihren Stirnseiten (2', 3') auf einer Breitseite (1') des ersten Gehäuseblockes (1) sitzen.

3. Vorrichtung nach einem der vorhergehenden Ansprüche, dadurch gekennzeichnet, daß die Ventilanschlußöffnungen (8) den sich gegenüberliegenden Stirnseiten (1'') des ersten Gehäuseblocks (1) zugeordnet sind.

4. Vorrichtung nach einem der vorhergehenden Ansprüche, dadurch gekennzeichnet, daß erste und zweite Gehäuseblöcke (1, 2, 3) im wesentlichen eine Quadergestalt haben mit vorzugsweise quadratischen Stirnseiten (1'', 2', 3').

5. Vorrichtung nach einem der vorhergehenden Ansprüche, dadurch gekennzeichnet, daß der Ventilkolben (9) oder dergleichen sich in und quer zur Trennebene (8) zwischen ersten Gehäuseblock (1) und Ventilkopf (7) bewegen kann.

6. Vorrichtung nach einem der vorhergehenden Ansprüche, dadurch gekennzeichnet, daß der Zuführkanal (6) in einen die ventilkopfseitige Öffnung der Verbindungskanales (10) zumindest teilweise umgebenden Ringraum (16) sich öffnet, welcher von einem Randabschnitt des Kolbens (9), Tellers, Membran oder dergleichen überdeckt ist.

7. Vorrichtung nach einem der vorhergehenden Ansprüche, dadurch gekennzeichnet, daß eine der beiden Schraubenspindeln (11) eines Volumenmeßwerkes ein Impulsgeberrad (17) trägt und der zugehörige Gehäuseblock ein am Rotorgehäuse angebrachtes Sensorgehäuse aufweist.

8. Vorrichtung nach Anspruch 7, dadurch gekennzeichnet, daß der Impulsgeber (17) ein mit mindestens einem, bevorzugt vier Magneten (18) versehenes Polrad ist und der zugeordnete, das Polrad berührungsfrei ablesende Sensor (19) ein Magnetsensor, beispielsweise ein Hall-Element ist.

9. Vorrichtung nach einem der vorhergehenden Ansprüche, dadurch gekennzeichnet, daß die Ventilköpfe (7) die Betätigungsorgane beispielsweise Magnetventile (20) für die Ventile ausbilden.

10. Vorrichtung nach einem der vorhergehenden Ansprüche, dadurch gekennzeichnet, daß der Kolben (9), Teller oder dergleichen mittels Vorsteuerventil (20) gesteuert ist.

11. Vorrichtung nach einem der vorhergehenden Ansprüche, gekennzeichnet durch einen ventilverschließbaren Bypass (21) zwischen Zuführ- (6) und Verbindungskanal (10) .

12. Vorrichtung nach einem der vorhergehenden Ansprüche, dadurch gekennzeichnet, daß der Eintrittsöffnung (4) ein Rückschlagventil (22) zugeordnet ist.

13. Vorrichtung nach einem der vorhergehenden Ansprüche, dadurch gekennzeichnet, daß der zweite Gehäuseblock (2, 3) zwei parallelverlaufende, sich überschneidende Bohrungen zur Aufnahme der Spindeln (11, 12) und stirnseitig offene, sich den Bohrungen anschließende querschnittsgrößere Kammern (23) zur Aufnahme der die Spindeln (11, 12) lagernden Kugellagern (13, 14, 13', 14') ausbildet.

14. Vorrichtung nach einem der vorhergehenden Ansprüche, gekennzeichnet durch eine U-förmige Blockanordnung, wobei zwei parallel zueinander angeordnete zweite Gehäuseblöcke (2, 3) die U-Schenkel ausbilden und der erste Gehäuseblock (1) mit seiner zentralen Eingriffsöffnung (4) den U-Steg.

## Claims

1. A device for metering and measuring quantities of liquid, in particular in a pump for liquid fuels, having a plurality of volume meters, an assigned valve being arranged upstream of each volume meter, and having a liquid supply which branches into individual supply lines opening out into the valves, wherein the valves (5) and the volume meters are assigned to a housing (1, 2, 3) configured in the form of a block, which housing h as an inlet opening (4) and supply ducts (6), which branch off from the inlet opening (4) to the valves (5) and form the individual supply lines, a first housing block (1) forming the inlet opening (4) and valve connection openings (8) covered by a respective valve head (7), in which valve connection openings (8) a respective supply duct (6) opens out and from which proceeds a respective connecting duct (10) to the assigned volume meter, which connecting duct can be closed off by a piston (9), a disk, a diaphragm or the like of a valve (5), the volume meters being assigned in each case separately to a second housing block (2, 3) and each second housing block (2, 3) forming the rotor housing for two mutually engaging screw spindles (11, 12) of a screw-spindle meter, which spindles allow axial through-flow, and those ends (2', 3') of the second housing blocks which are assigned to the axial bearings (13, 14) of the screw spindles covering outlet openings (15) in the connecting ducts.

2. Device according to claim 1. characterised in that the face surfaces of the second housing blocks (2, 3) are seated against a broad side (1') of the first housing block (1).

3. Device according to one of the previous claims, characterised in that the valve connection orifices (8) are assigned to the opposite face surfaces (1") of the first housing block (1).

4. Device according to one of the previous claims, characterised in that the first and second housing blocks (1, 2, 3) are substantially cuboid in shape and, for preference, have square face surfaces (1", 2', 3')

5. Device according to one of the previous claims, characterised in that the valve piston (9) or similar is able to move across and at right angles within the parting plane (8) between the first housing block (1) and the valve head (7).

6. Device according to one of the previous claims, characterised in that the supply duct (6) leads into an annular opening (16) which at least partly surrounds the orifice of the supply duct (6) in the region of the valve head and which is covered by a section of the edge of piston (9), disc, diaphragm or similar.

7. Device according to one of the previous claims, characterised in that one of the two screw spindles (11) of a flowmeter carries a pulse generator disc (17) and is provided with a sensor housing, fitted to the rotor housing.

8. Device according to one of the previous claims, characterised in that the pulse generator (17) is a pole wheel, fitted with at least one, for preference with four magnets (18), and in that the associated non-contacting sensor (19), cooperating with the pole wheel, is a magnetic sensor, for preference a Hall effect sensor.

9. Device according to one of the previous claims, characterised in that the actuating elements of valve heads (7) are formed, for example, by solenoid valves (20).

10. Device according to one of the previous claims, characterised in that piston (9), disc or similar is controlled by a pilot valve (20).

11. Device according to one of the previous claims, characterised by a valve controlled by-pass (21), between supply duct (6) and connecting duct (10).

12. Device according to one of the previous claims, characterised in that the inlet opening (4) is associated with a non-return valve (22).

13. Device according to one of the previous claims, characterised in that the second housing block (2, 3) features two parallel overlapping bores to accept the spindles (11, 12) and which, in line with the bores, extend into chambers (23) of larger cross section with open fronts to accept ball bearings (13, 14, 13', 14') as supports for spindles (11,12)

14. Device according to one of the previous claims, characterised in that the blocks are arranged in the shape of the letter U, whereby two secondary blocks, arranged in parallel (2, 3), form the lateral sides, which are linked by the first housing block (1), having a central engagement opening.

## Revendications

1. Dispositif de dosage et de mesure de quantités de liquide, en particulier dans un distributeur de carburants liquides, possédant une pluralité de systèmes de mesure de volume, en amont de chaque système de mesure de volume étant disposée une soupape associée, et ayant une amenée de liquide, qui se divise en différentes canalisations d'amenée débouchant dans les soupapes, caractérisé en ce que les soupapes (5) et les appareils de mesure de volume sont associés à un boîtier (1, 2, 3) sous forme de bloc, lequel boîtier présente une ouverture d'admission (4) et des canaux d'amenée (6) qui se divisent depuis l'ouverture d'admission (4) vers les soupapes (5) et forment les différentes canalisations d'amenée, un premier bloc de boîtier (1) formant l'ouverture d'admission (4) et des ouvertures de raccordement de soupape (8) recouvertes par une tête de soupape respective (7), dans lesquelles ouvertures de raccordement de soupape (8) débouche un canal d'amenée respectif (6) et duquel part un canal de liaison respectif (10) pouvant être fermé par un piston (9), un disque, une membrane ou analogue d'une soupape (5) en direction du système de mesure de volume associé, les systèmes de mesure de volume étant associés séparément à un second bloc de boîtier (2, 3) et chaque second bloc de boîtier (2, 3) forme le boîtier du rotor pour deux broches à vis (11, 12) pénétrant l'une dans l'autre, pouvant être parcourues axialement d'un compteur à broches à vis, les côtés frontaux (2', 3') associés aux paliers axiaux (13, 14) des broches à vis des seconds blocs de boîtier recouvrant les ouvertures de sortie (15) des canaux de liaison.

2. Dispositif selon la revendication 1, caractérisé en ce que les seconds blocs de boîtier (2, 3) reposent par leurs côtés frontaux (2', 3') sur un côté large (1') du premier bloc de boîtier (1).

3. Dispositif selon l'une quelconque des revendications précédentes, caractérisé en ce que les ouvertures de raccordement de soupape (8) sont associées aux côtés frontaux (1") en vis-à-vis du premier bloc de boîtier (1).

4. Dispositif selon l'une quelconque des revendications précédentes, caractérisé en ce que les premier et seconds blocs de boîtier (1, 2, 3) sont de forme sensiblement parallélépipédique avec des côtés frontaux (1", 2', 3') de préférence carrés.

5. Dispositif selon l'une quelconque des revendications précédentes, caractérisé en ce que le piston de soupape (9) ou analogue peut se déplacer dans et transversalement au plan de séparation entre le premier bloc de boîtier (1) et la tête de soupape (7).

6. Dispositif selon l'une quelconque des revendications précédentes, caractérisé en ce que le canal d'amenée (6) débouche dans une chambre annulaire (16) entourant au moins partiellement l'ouverture côté tête de soupape du canal de liaison (10), qui est recouverte par un segment périphérique du piston (9), disque, membrane ou analogue.

7. Dispositif selon l'une quelconque des revendications précédentes, caractérisé en ce que l'une des deux broches à vis (11) d'un système de mesure de volume porte une roue génératrice d'impulsions (17) et le bloc de boîtier associé présente un boîtier de capteur disposé sur le boîtier du rotor.

8. Dispositif selon la revendication 7, caractérisé en ce que le générateur d'impulsions (17) est une roue polaire munie au moins d'un, de préférence de quatre aimants (18) et le capteur (19) associé, lisant sans contact la roue polaire, est un capteur magnétique, par exemple un élément de Hall.

9. Dispositif selon l'une quelconque des revendications précédentes, caractérisé en ce que les têtes de soupape (7) constituent les organes de manoeuvre, par exemple des électrovannes (20), pour les soupapes.

10. Dispositif selon l'une quelconque des revendications précédentes, caractérisé en ce que le piston (9), le disque ou analogue est commandé au moyen d'une soupape de précommande (20).

11. Dispositif selon l'une quelconque des revendications précédentes, caractérisé par une dérivation (21) pouvant être fermée par soupape entre le canal d'amenée (6) et le canal de liaison (10).

12. Dispositif selon l'une quelconque des revendications précédentes, caractérisé en ce qu'à l'ouverture d'admission (4) est associée une soupape de retenue (22).

13. Dispositif selon l'une quelconque des revendications précédentes, caractérisé en ce que le second bloc de boîtier (2, 3) forme deux alésages parallèles s'entrecoupant en vue de la réception des broches (11, 12) et des chambres (23) de plus grande section, ouvertes frontalement, se raccordant aux alésages en vue de la réception des paliers à billes (13, 14, 13', 14') supportant les broches (11, 12).

14. Dispositif selon l'une quelconque des revendications précédentes, caractérisé par une disposition des blocs en forme de U, deux seconds blocs de boîtier (2, 3) disposés parallèles entre eux formant les branches du U et le premier bloc de boîtier (1) formant la barre du U avec son ouverture d'engagement centrale (4).
